# EUROPÄISCHE PATENTSCHRIFT

(11) **EP 3 124 571 B1**
(45) Veröffentlichungstag und Bekanntmachung des Hinweises auf die Patenterteilung: **12.09.2018**
(21) Anmeldenummer: 16181202.9
(22) Anmeldetag: 26.07.2016
(51) Int. Cl.: C09K 3/18

(54) **FLÜSSIGES ENTEISUNGSMITTEL UND VERFAHREN ZU DESSEN HERSTELLUNG**
LIQUID DEICING AGENT AND METHOD FOR PRODUCING THE SAME
MOYEN DE DEGIVRAGE ET SON PROCEDE DE FABRICATION

(30) Priorität: 28.07.2015 DE 102015214249
(43) Veröffentlichungstag der Anmeldung: 01.02.2017
(73) Patentinhaber: Kannegießer, Jan, 68229 Mannheim (DE)
(72) Erfinder: Kannegießer, Jan, 68229 Mannheim (DE)
(74) Vertreter: Rauschenbach, Marion

(56) Entgegenhaltungen:
- US-A- 5 127 954
- US-A1- 2008 308 764

## Beschreibung

### Anwendungsgebiet der Erfindung

Die vorliegende Erfindung bezieht sich auf das Gebiet der Chemie und betrifft ein flüssiges Enteisungsmittel sowie ein Verfahren zu dessen Herstellung. Das erfindungsgemäße flüssige Enteisungsmittel kann beispielsweise zur Beseitigung von Schnee und/oder Eis auf öffentlichen Straßen und Plätzen oder auch auf Roll- und Landebahnen von Flughäfen eingesetzt werden.

### Stand der Technik

Niederschläge in Form von Schnee und/oder Eis oder überfrorener Niederschlag stellen für Mensch und Maschine besondere Unfallgefahren dar und führen oft zur starken Beeinträchtigungen des Verkehrsablaufes und der Verkehrssicherheit.

Zur Beseitigung von Schnee und/oder Eis sind aus dem Stand der Technik verschiedene Möglichkeiten bekannt. So wird bei schneebedeckten Fahrbahnen teilweise die sogenannte Nullstreuung angewandt. Dabei handelt es sich um das mechanische Räumen ohne Einsatz von Streugut. Mit der mechanischen Räumung können Fahrbahnen und Flächen grob von Schnee und/oder Eis durch Schieben, Kehren oder Schaufeln befreit werden. Allerdings verbleibt nach der mechanischen Räumung oder bei flüssigen Niederschlägen und nachfolgend einsetzendem Frost oftmals ein dünner gefrorener Niederschlagsrest, der durch die mechanische Beseitigung nur ungenügend von der Oberfläche entfernt werden kann. Die Nullstreuung bietet sich insbesondere auf Nebenstraßen oder Quartierstraßen ohne eindeutige Gefahrenstellen an. Für die Beseitigung von Schnee und/oder Eis von beispielsweise Roll- und Landebahnen oder stark frequentierten Straßen stellt die Nullstreuung allerdings keine Alternative dar.

Eine weitere Möglichkeit zur Beseitigung der Rutschgefahr durch Schnee und/oder Eis auf Flächen ist das Streuen von abstumpfenden Streumitteln, wie beispielsweise Sand, Split oder Sägespänen. Abstumpfende Streumittel verbessern die Griffigkeit der Fahrbahnoberfläche, da sich die Körner mit der glatten Oberfläche der Eis- oder Schneeschicht verzahnen. Bei aufgetauten Oberflächen ist allerdings nachteilig, dass die auf der Fläche verbliebenen Reste der abstumpfenden Streumittel entgegengesetzt wirken und zu einem verminderten Kraftschlussbeiwert führen. Neben der, verglichen mit Streusalz, höheren Einsatzmenge ist für den Einsatz von abstumpfenden Streumitteln im Winterdienst nachteilig, dass sie von den Fahrzeugen an den Straßenrand geschleudert werden, und damit häufig erneut aus- und aufgebracht werden müssen. Abstumpfende Streumittel finden auf stark frequentierten Straßen oder Roll- und Landebahnen kaum Einsatz.

Eine verbreitete Maßnahme, um Flächen von Schnee und/oder Eis zu befreien, ist das Ausbringen und Auftragen von Chemikalien auf Schnee und/oder Eis. Beim Einsatz von chemischen Tausalzen als flüssiges oder kristallines Enteisungsmittel sind neben ökotoxischen und biologischen Anforderungen auch die Auftauleistung sowie die korrosive Verträglichkeit der von Schnee und/oder Eis zu befreienden Oberfläche sowie der metallischen Bauteile von Fahrzeugen zu berücksichtigen.

Ein vielseitiges und preisgünstiges Auftaumittel ist Natriumchlorid, das bis zu Temperaturen von -5°C als Tau- und Streusalz Verwendung findet. Obwohl Natriumchlorid als Kochsalz in großen Mengen und damit kostengünstig zur Verfügung steht, ist dessen Einsatz jedoch aufgrund der aggressiven korrosiven Wirkung, beispielsweise bei metallischen Flug- und Fahrzeugteilen, problematisch. Auch werden bei Temperaturen unter -5°C signifikant höhere Einsatzmengen für die zu enteisende Oberfläche benötigt, um eine ausreichende Auftauleistung erreichen zu können. Damit verbunden ist ein Anstieg der Kosten für das Auftauen von Schnee und/oder Eis auf der Oberfläche.

Aus der DE 101 27 004 A1 ist ein Enteisungs- oder Vereisungsschutzmittel auf Basis von Glykolen und Wasser bekannt, welches 0,01 bis 1 Gew.-% von mindestens einem Alkalimetallsalz der Polyasparaginsäure oder der Polyglutaminsäure oder eines Gemisches daraus mit einem Molekulargewicht von 5.000 bis 50.000 g/mol enthält.

Aus der DE 69 60 1932 T2 ist eine umweltfreundliche und glykolfreie Flüssigkeit zum Auflösen von Eis und Schnee als Enteisungs- und rutschhemmendes Mittel, hauptsächlich für öffentliche Straßen, Eisenbahnweichen, Start- und Landebahnen von Flughäfen durch Aufbringen flüssiger Stickstoffdüngerkomponenten bekannt, bei dem im Masseverhältnis von Wasser - Harnstoff - Ammoniumnitrat im Bereich von (4,5-5,5) : (3,6-4,4) : (6,3-7,7) das Auflösen von Eis und Schnee realisiert wird. Nachteilig beim Einsatz der Komponente Harnstoff ist allerdings, dass nach Aufbringung eine Überdüngung der Umwelt, der Böden und des Grundwassers zu verzeichnen ist. Aus diesem Grund ist in vielen Ländern der Einsatz von harnstoffbasierten Enteisungsmitteln untersagt. Ebenso ist nachteilig, dass, verglichen mit gewöhnlichem Streusalz, die Komponente Harnstoff teurer und nur bis Temperaturen von ca. -12°C effektiv einsetzbar ist.

Aus der DE 40 34 792 A1 ist ein flüssiges Enteisungsmittel bekannt, bestehend im Wesentlichen aus 15 bis 70 Gew.-% von mindestens einem Alkalimetallacetat oder mindestens einem Erdalkalimetallacetat oder einer Mischung der beiden, und aus 0,01 bis 1 Gew.-% von mindestens einer wasserlöslichen Triazolverbindung oder mindestens einer wasserlöslichen Imidazolverbindung oder einer Mischung der beiden und aus Wasser, als Rest auf 100 Gew.-%.

Aus der EP 03 75 214 A1 ist ein flüssiges Enteisungsmittel bekannt, das eine wässrige Lösung aus 45 bis 60 Gew.-% eines Alkalimetallacetats und/oder einem Alkalimetallformiat, und 0,1 bis 0,4 Gew.-% von einem Alkalimetallphosphat, und 0,2 bis 0,6 Gew.-% von einem Alkalimetallnitrit ist, wobei die Zusammensetzung einen pH-Wert im Bereich von 9,5 bis 11,2 aufweist.

Und aus der DE 197 02 242 A1 ist ein korrosionsinhibiertes Enteisungsmittel bekannt, bestehend im Wesentlichen aus 87 bis 99,45 Gew.-% von einem Alkalimetallhalogenid und/oder einem Erdalkalimetallhalogenid, und aus 0,5 bis 10 Gew.-% von einem Alkalimetallsilicat, und aus 0,05 bis 3 Gew.-% von einem Alkalimetallphosphat.

Außerdem ist aus der US 2008/0308764 A1 ein Enteiser bekannt, der eine Mischung von einem Enteisungsmittel, einem Anfeuchtungsmittel und einem Auslaugungsinhibitor umfasst. Das Enteisungsmittel kann ein festes Enteisungssalz, wie Natriumchlorid, sein. Das Anfeuchtungsmittel kann eine wässrige Lösung aus Natriumchlorid, Magnesiumchlorid, Calciumchlorid, Kaliumacetat, Calciummagnesiumacetat oder eine Mischung davon sein. Der Auslaugungsinhibitor kann Sojamehl, Dextrin, Gummiarabikum, Guargummi, Xanthan, Ghattigummi, Karayagummi, Johannesbrotkernmehl, Karrageengummi, Natriumalginat, teilweise hydrolysiertes Polyacrylamid oder eine Mischung davon sein.

Nachteilig beim Stand der Technik ist, dass bekannte flüssige Enteisungsmittel eine hohe korrosive Wirkung gegenüber metallischen Materialien aufweisen. Ebenfalls nachteilig ist, dass mit diesen flüssigen Enteisungsmitteln ökotoxische Nebenwirkungen verbunden sind.

### Darstellung der Erfindung

Der Erfindung liegt die Aufgabe zugrunde, ein flüssiges Enteisungsmittel anzugeben, dass eine geringe oder keine korrosive Wirkung gegenüber metallischen Materialien aufweist und eine geringe oder keine ökotoxischen Nebenwirkungen zeigt. Eingeschlossen in die Aufgabe ist die Bereitstellung eines Verfahrens, mit dem das flüssige Enteisungsmittel kostengünstig und einfach hergestellt wird.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen abhängigen Ansprüche im Sinne einer und-Verknüpfung mit einschließt, solange sie sich nicht gegenseitig ausschließen.

Das erfindungsgemäße flüssige Enteisungsmittel besteht aus einer wässrigen Lösung, die einen pH-Wert von 7,0 bis 9,0 aufweist, mindestens enthaltend die Komponenten
a) 30,0 bis 40,0 Gew.-% mindestens eines Chlorids eines oder mehrerer Elemente Be, Mg, Ca, Ba, oder Ra und/oder Verbindungen mit Chloriden dieser Elemente, und
b) 0,5 bis 2,0 Gew.-% mindestens eines Phosphonats als Korrosionsinhibitors.
Vorteilhafterweise enthält die wässrige Lösung 32,0 bis 36,0 Gew.-% der Komponente a) und 1,0 bis 1,5 Gew.-% der Komponente b).

Weiterhin vorteilhafterweise ist die Komponente a) Magnesiumchlorid und/oder Calciumchlorid.

Und auch vorteilhafterweise ist das als Phosphonat 1-Hydroxyethan-(1,1-diphosphonsäure), Amino-tris(methylenphosphonsäure), Diethylentriaminpenta(methylenphosphonsäure), Ethylendiamintetra(methylenphosphonsäure), Phosphonobutan-tricarbonsäure, 2-Phosphonobutan-1,2,4-tricarbonsäure und/oder 3-Carboxy-3-phosphonoadipinsäure vorhanden.

Bei dem erfindungsgemäßen Verfahren zur Herstellung eines flüssigen Enteisungsmittels wird zu Wasser mindestens 30,0 bis 40,0 Gew.-% mindestens eines Chlorids eines oder mehrerer Elemente Be, Mg, Ca, Ba, oder Ra und/oder Verbindungen mit Chloriden dieser Elemente zugegeben, danach wird die wässrige Lösung gemischt, danach werden b) 0,5 bis 2,0 Gew.-% mindestens eines Phosphonats als Korrosionsinhibitor der wässrigen Lösung zugegeben, wobei nach der Zugabe der Komponente a) und/oder nach Zugabe der Komponente b) eine Abkühlung der wässrigen Lösung durch eine Luftkühlvorrichtung und/oder eine Wasserkühlvorrichtung realisiert wird, und abschließend wird die wässrige Lösung nochmals gemischt und kann weiterverarbeitet werden.

Vorteilhafterweise werden zu Wasser a) 32,0 bis 36,0 Gew.-% eines Chlorids einer oder mehrerer Erdalkalimetalle oder Verbindungen mit Chloriden von Erdalkalimetallen und 1,0 bis 1,5 Gew.-% mindestens eines Korrosionsinhibitors der wässrigen Lösung zugegeben.

Ebenfalls vorteilhafterweise wird als Chlorid der Erdalkalimetalle Magnesiumchlorid und/oder Calciumchlorid zugegeben.

Weiterhin wird als Phosphonat vorteilhafterweise 1-Hydroxyethan-(1,1-diphosphonsäure), Amino-tris(methylenphosphonsäure), Diethylentriaminpenta(methylenphosphonsäure), Ethylendiamin-tetra(methylenphosphonsäure), Phosphonobutan-tricarbonsäure, 2-Phosphonobutan-1,2,4-tricarbonsäure und/oder 3-Carboxy-3-phosphonoadipinsäure zugegeben.

Und auch vorteilhaft ist es, wenn nach der Zugabe des Korrosionsinhibitors und Mischung der wässrigen Lösung eine Filtration von nichtgelösten Bestandteilen der Mischung durchgeführt wird.

Mit der vorliegenden Erfindung wird erstmals ein flüssiges Enteisungsmittel bereitgestellt, das eine geringe oder keine korrosive Wirkung gegenüber Metallen aufweist und geringe oder keine ökotoxischen Nebenwirkungen zeigt. Außerdem wird ein Verfahren bereitgestellt, mit dem das flüssige Enteisungsmittel kostengünstig und einfach hergestellt wird.

Mit der Erfindung wird ein flüssiges Enteisungsmittel bereitgestellt, dessen besondere vorteilhaften Eigenschaften aufgrund der einzelnen Komponenten a) und b) und deren Zusammenwirken sowie aufgrund der gewichtsmäßigen Zusammensetzung der einzelnen Komponenten der wässrigen Lösung erreicht werden.

Bei der Komponente a) handelt es sich um Chloride eines oder mehrere Erdalkalimetalle oder Verbindungen mit Chloriden von Erdalkalimetallen, vorzugsweise um Magnesiumchlorid und/oder Calciumchlorid. In Verbindung mit Chloriden von Erdalkalimetallen sollen erfindungsgemäß diese überwiegend vorhanden sein. Chloride der Erdalkalimetalle weisen gegenüber Alkalimetallchloriden eine wesentlich verbesserte Auftauwirkung auf und sind bis zu Temperaturen von - 50°C einsetzbar. Allerdings sind Chloride der Erdalkalimetalle stark hygroskopisch und setzen in Gegenwart von Feuchtigkeit Wärmeenergie frei. Dies ist zwar vorteilhaft für eine hohe Auftauleistung der zu enteisenden Oberflächen, aber andererseits können derartige Wärmefreisetzungen während des Enteisens der Oberflächen zu einem unerwünschten Wärmeeintrag in die zu enteisenden Materialien führen und diese Materialen zersetzen. Ebenso können Behälter während der Herstellung und auch Lager- und/oder Transportbehälter durch die Wärmefreisetzung beschädigt oder beeinträchtigt werden. Um dies zu verhindern, wird die erfindungsgemäße wässrige Lösung aus der Komponente a) mit oder ohne Komponente b) während oder nach der Herstellung gekühlt.

Als Komponente a) werden erfindungsgemäß 30,0 bis 40,0 Gew.-%, vorteilhafterweise 32,0 bis 36,0 Gew.-%, an Chloriden eines oder mehrerer Elemente Be, Mg, Ca, Ba, oder Ra und/oder Verbindungen mit Chloriden dieser Elemente eingesetzt. Die Gewichtsanteile der Komponenten beziehen sich auf die wässrige Lösung insgesamt.

Weiterhin ist erfindungsgemäß neben der Komponente a) die Komponente b) in den beanspruchten Gewichtsanteilen beider Komponenten in dem flüssigen Enteisungsmittel vorhanden.

Die korrosionsinhibierende Wirkung des erfindungsgemäßen flüssigen Enteisungsmittels beruht auf den Einsatz von 0,5 bis 2,0 Gew.-% des Phosphonats als Korrosionsinhibitor. Vorteilhafterweise sind solche Phosphonate 1-Hydroxyethan-(1,1-diphosphonsäure), Amino-tris(methylenphosphonsäure), Diethylentriaminpenta(methylenphosphonsäure), Ethylendiamin-tetra(methylenphosphonsäure), Phosphonobutan-tricarbonsäure, 2-hosphonobutan-1,2,4-tricarbonsäure und/oder 3-Carboxy-3-phosphonoadipinsäure.

Die vorteilhafterweise vorhandenen und eingesetzten Korrosionsinhibitoren zeigen ihre korrosionsinhibierende Wirkung insbesondere bei allen Materialien von Flugzeugen oder Fahrzeugen, die mit dem erfindungsgemäßen flüssigen Enteisungsmittel in direkten Kontakt kommen. Ihre Zusammensetzung und korrosionsinhibierende Wirkung ist speziell auf die in Flugzeugen verwendeten metallischen Materialien, aber auch auf andere der Korrosion unterliegenden Materialien abgestimmt.

Das erfindungsgemäße flüssige Enteisungsmittel mit den erfindungsgemäßen Gewichtsanteilen an Chloriden eines oder mehrerer Elemente Be, Mg, Ca, Ba, oder Ra und/oder Verbindungen mit Chloriden dieser Elemente zeigt eine sehr effektive Auftauleistung.

Darüber hinaus weist das erfindungsgemäße flüssige Enteisungsmittel durch den Einsatz des Korrosionsinhibitors eine geringe oder keine ökotoxische Wirkung und eine geringe oder keine korrosive Wirkung gegenüber Metallen auf.

Das erfindungsgemäße flüssige Enteisungsmittel ist bis zu Temperaturen von -31°C effektiv einsetzbar.

Durch die erfindungsgemäße Zusammensetzung des flüssigen Enteisungsmittels mit den beanspruchten Gewichtsanteilen ist es erstmals möglich, auf den Einsatz von beispielsweise Erdalkalimetallacetaten, Alkalimetallformiaten, Harnstoff, Alkalimetallsilikaten und/oder Alkalimetallphosphaten bei flüssigen Enteisungsmitteln und damit auf Umweltbelastungen durch diese Stoffe verzichten zu können. Damit wird erfindungsgemäß ein besonders umweltfreundliches und korrosionsarmes flüssiges Enteisungsmittel für Flächen bereitgestellt, das einen pH-Wert in einem Bereich von 7 bis 9 und einen Wert der Wassergefährdungsklasse (WGK) von 1 aufweist.

Ein wesentlicher Vorteil des erfindungsgemäßen flüssigen Enteisungsmittels besteht darin, dass ein biologischer Abbau in Kläranlagen temperaturunabhängig erfolgen kann. So können im Vergleich mit acetat- und formiatbasierten flüssigen Enteisungsmitteln auch bei Temperaturen ≤ -5°C die über die Abwassersysteme gesammelten flüssigen Enteisungsmittelreste des erfindungsgemäßen flüssigen Enteisungsmittels sofort den Kläranlagen zugeführt, geklärt und biologisch abgebaut werden. Ein spezielles Auffangen und Zwischenlagern der über die Abwassersysteme aufgefangenen erfindungsgemäßen Enteisungsmittelreste bei Temperaturen von ≤ 5°C ist im Vergleich mit acetat- und formiatbasierten flüssigen Enteisungsmitteln nicht notwendig.

Ein weiterer Vorteil des erfindungsgemäßen flüssigen Enteisungsmittels besteht darin, dass bei Zuführung der aufgefangenen Enteisungsmittelreste in der Kläranlage eine Bildung von mikrobiologischen Bakterien, vor allem von Fadenbakterien, sowie die damit verbundene Bildung von hochviskosen Schäumen im Klärbecken verhindert wird. Die Bildung hochviskoser Schäume stellt ein häufig beobachtetes Betriebsproblem von Kläranlagen dar, die nach dem Belebtverfahren klären. Insbesondere die stickstoffeliminierenden Anlagen mit Nitrifikation/Denitrifikation, die zur Gewährleistung der Nitrifikation sehr niedrig belastet gefahren werden, aber auch Anlagen mit biologischer Phosphorelimination sind von diesem Phänomen betroffen. Aufgrund der erfindungsgemäßen Zusammensetzung des flüssigen Enteisungsmittels mit den beanspruchten Gewichtsanteilen der Komponenten a) und b) wird vorteilhafterweise die Bildung von mikrobiologischen Bakterien im Klärwasser, wie auch die damit verbundene Bildung von hochviskosen Schäumen im Klärbecken, vermieden.

Ein besonderer umwelttechnischer Vorteil des erfindungsgemäßen flüssigen Enteisungsmittels liegt darin, dass die wässrige Lösung einen pH-Wert von 7 bis 9 aufweist. Damit ist das flüssige Enteisungsmittel eine neutrale wässrige Lösung, mit der eine besonders geringe ökotoxische Gefährdung beim Eindringen des flüssigen Enteisungsmittels in Böden oder in das Grundwasser besteht.

Mit dem erfindungsgemäßen Verfahren zur Herstellung des erfindungsgemäßen flüssigen Enteisungsmittels werden im ersten Schritt zu Wasser als Komponente a) mindestens 30,0 bis 40,0 Gew.-% mindestens eines Chlorids eines oder mehrerer Elemente Be, Mg, Ca, Ba, oder Ra und/oder Verbindungen mit Chloriden dieser Elemente zugegeben. Vorteilhafterweise werden 32,0 bis 36,0 Gew.-% der Komponente a) zugegeben und die wässrige Lösung danach gemischt. Das Mischen der wässrigen Lösung mit der Komponente a) kann beispielsweise durch ein elektromechanisches Rührwerk realisiert werden. Durch das Mischen der wässrigen Lösung geht die in den beanspruchten Gewichtsanteilen zugegebene Komponente a) in Lösung über. Der wässrigen Lösung kann im Anschluss die beim Mischen entstandene exotherme Wärme entzogen werden und die wässrige Lösung kann auf Raumtemperatur abgekühlt werden. Durch die Abkühlung der wässrigen Lösung kann eine optimierte Temperatureinstellung der wässrigen Lösung für nachfolgende Verfahrensschritte realisiert werden. Nachdem die Komponente a) in Lösung übergegangen ist, wird der wässrigen Lösung mindestens ein Korrosionsinhibitor mit einem Gewichtsanteil von 0,5 bis 2,0 Gew.-% als Komponente b) zugegeben, vorteilhafterweise mit einem Gewichtsanteil von 1,0 bis 1,5 Gew.-%. Nach Zugabe der Komponente b) in den beanspruchten Gewichtsanteilen wird die wässrige Lösung nochmals gemischt. Die Komponente b) liegt vorteilhafterweise als Lösung vor.
Die Abkühlung der wässrigen Lösung kann auch nach der Zugabe der Komponenten a) und b) realisiert werden.

Aufgrund der natürlich vorkommenden Verunreinigungen der Ausgangsstoffe für die Komponenten a) und b) kann, vorteilhafterweise nach der Zugabe des Korrosionsinhibitors und Mischung der wässrigen Lösung, eine Filtration von nichtgelösten Bestandteilen der Mischung durchgeführt werden. Derartige Feststoffe weisen häufig Abmessungen im µm-Bereich auf und trüben und/oder färben die wässrige Lösung des erfindungsgemäßen flüssigen Enteisungsmittels. Die Filtration kann beispielsweise mittels Filtervliesen realisiert werden, die beispielsweise die Filterung von 8000 bis 15000 l des erfindungsgemäßen flüssigen Enteisungsmittels realisieren können.
Für Anwendungen des erfindungsgemäßen flüssigen Enteisungsmittels mittels Sprühens kann dies zur Verhinderung von Verstopfungen vorteilhaft sein.

Mit dem erfindungsgemäßen Verfahren wird ein erfindungsgemäßes flüssiges Enteisungsmittel hergestellt, dass unter anderem aufgrund des neutralen pH-Wertes geringe oder keine korrosive Wirkung gegenüber Metallen aufweist und geringe oder keine ökotoxischen Nebenwirkungen zeigt.

### Ausführungsbeispiel

Die erfindungsgemäße Lösung soll anhand eines Ausführungsbeispiels näher erläutert werden.

### Beispiel 1

In einen Edelstahlbehälter mit einem Fassungsvermögen von 10.000 Liter werden 5.805 Liter Wasser mit einer Temperatur von 10°C eingefüllt. Anschließend werden 3,105 kg CaCl₂ dem Wasser beigemischt und für die Dauer von 1 Stunde mittels elektromechanischer Rührvorrichtung gemischt. Nachfolgend wird die wässrige Lösung für 1 Stunde an Luft auf 22°C stehen gelassen und dadurch abgekühlt. Nach der Abkühlung wird der wässrigen Lösung 90 kg Phosphonobutan-tricarbonsäure zugegeben und mit der wässrigen Lösung gemischt. Anschließend verbleibt das so hergestellte flüssige Enteisungsmittel für weitere 0,5 Stunden im Edelstahlbehälter und kann nach der Verweilzeit zur weiteren Abkühlung in Transportbehälter abgefüllt werden.

Das erfindungsgemäße flüssige Enteisungsmittel wurde nach der Herstellung hinsichtlich der Korrosionswirkung in Anlehnung an die Prüfmethode ASTM F483-09 untersucht. Es wurden für die Untersuchungen Werkstoffproben mit den Abmessungen 50,8 x 25,4 x 1,6 mm mit 3,2 mm Bohrung gefertigt. Bei den Prüfteilen handelt es sich um Ausschnitte von Carbon-Bremsscheiben (Prüfteil 1) und Bremsbelägen (Prüfteil 2) des Flugzeugtyps "Dornier DO-328 Jet" mit den Teile-Nr. AH091447 und AHA2227. Bei den Untersuchungen handelt es sich um einen 168-stündigen Immersionsversuch, in dem je Versuch 3 Werkstoffproben bei 38°C in 225,6 ml flüssigem Enteisungsmittel ausgelagert werden. Eine Reinigung der Werkstoffproben erfolgt vor dem Versuch mittels Waschbenzin und Methyl-n-Propyl-Keton. Anschließend werden die Proben im Wärmeschrank getrocknet. Nach 24h sowie nach Versuchsende werden mittels Gravimetrie Massenänderungen und mit dem unbewaffneten Auge visuelle Veränderungen der Proben ausgewertet. Die Ergebnisse zeigen eine generelle Massenzunahme über die Versuchslaufzeit hinweg auf. Diese liegt bei den Proben aus Prüfteil 1 zwischen 0,2 und 6,2 mg, bei den Proben aus Prüfteil 2 zwischen 3,3 und 7,1 mg. Dies entspricht einer prozentualen Massenzunahme (bezogen auf das Probengewicht vor dem Versuch) zwischen 0,006 und 0,1663 % bei Proben aus Prüfteil 1 sowie zwischen 0,0958 und 0,2073 % bei Proben aus Prüfteil 2 (siehe Tabelle 1). An den gefertigten Werkstoffproben wurden nach Korrosionsprüfung in Anlehnung an Prüfmethode ASTM F483-09, mittels Befund durch Augenschein, keine korrosiven Veränderungen der Probenoberflächen festgestellt. Auch konnten keine Verfärbungen, Anätzungen oder Aufwachsungen festgestellt werden.

**Tabelle 1**

| **Prüfteil** | **Probe** | **Masse vor Versuch** | **Massenänderung nach 24h** | | **Massenänderung nach Versuch** | |
|---|---|---|---|---|---|---|
| | | **[g]** | **[mg]** | **[%]** | **[mg]** | **[%]** |
| 1 | 1 | 3,7292 | +6,900 | +0,1850 | +6,2000 | +0,1663 |
| 1 | 2 | 3,3370 | +0,2000 | +0,0060 | +0,2000 | +0,0060 |
| 1 | 3 | 3,5100 | +0,2000 | +0,0057 | +0,4000 | +0,0114 |
| 2 | 1 | 3,4461 | +0,2000 | +0,0058 | +3,3000 | +0,0958 |
| 2 | 2 | 3,3454 | +0,9000 | +0,2690 | +4,7000 | +0,1405 |
| 2 | 3 | 3,4247 | +3,1000 | +0,0905 | +7,1000 | +0,2073 |

## Patentansprüche

1. Flüssiges Enteisungsmittel bestehend aus einer wässrigen Lösung, die einen pH-Wert von 7,0 bis 9,0 aufweist, mindestens enthaltend die Komponenten
a) 30,0 bis 40,0 Gew.-% mindestens eines Chlorids eines oder mehrerer Elemente Be, Mg, Ca, Ba, oder Ra und/oder Verbindungen mit Chloriden dieser Elemente, und
b) 0,5 bis 2,0 Gew.-% mindestens eines Phosphonats als Korrosionsinhibitor.

2. Flüssiges Enteisungsmittel nach Anspruch 1, bei dem die wässrige Lösung 32,0 bis 36,0 Gew.-% der Komponente a) und 1,0 bis 1,5 Gew.-% der Komponente b) enthält.

3. Flüssiges Enteisungsmittel nach Anspruch 1, bei dem die Komponente a) Magnesiumchlorid und/oder Calciumchlorid ist.

4. Flüssiges Enteisungsmittel nach Anspruch 1, bei dem als Phosphonat 1-Hydroxyethan-(1,1-diphosphonsäure), Amino-tris(methylenphosphonsäure), Diethylentriamin-penta(methylenphosphonsäure), Ethylendiamintetra(methylenphosphonsäure), Phosphonobutan-tricarbonsäure, 2-Phosphonobutan-1,2,4-tricarbonsäure und/oder 3-Carboxy-3-phosphonoadipinsäure vorhanden ist.

5. Verfahren zur Herstellung eines flüssigen Enteisungsmittels, bei dem zu Wasser a) mindestens 30,0 bis 40,0 Gew.-% mindestens eines Chlorids eines oder mehrerer Elemente Be, Mg, Ca, Ba, oder Ra und/oder Verbindungen mit Chloriden von dieser Elemente zugegeben wird, danach die wässrige Lösung gemischt wird, danach b) 0,5 bis 2,0 Gew.-% mindestens eines Phosphonats als Korrosionsinhibitor der wässrigen Lösung zugegeben werden, wobei nach der Zugabe der Komponente a) und/oder nach Zugabe der Komponente b) eine Abkühlung der wässrigen Lösung durch eine Luftkühlvorrichtung und/oder Wasserkühlvorrichtung realisiert wird, und abschließend die wässrige Lösung nochmals gemischt wird und weiterverarbeitet werden kann.

6. Verfahren nach Anspruch 5, bei dem zu Wasser 32,0 bis 36,0 Gew.-% eines Chlorids einer oder mehrerer Elemente Be, Mg, Ca, Ba, oder Ra oder Verbindungen mit Chloriden dieser Elemente und 1,0 bis 1,5 Gew.-% mindestens eines Phosphonats als Korrosionsinhibitor der wässrigen Lösung zugegeben werden.

7. Verfahren nach Anspruch 5, bei dem als Chlorid der Erdalkalimetalle Magnesiumchlorid und/oder Calciumchlorid zugegeben wird.

8. Verfahren nach Anspruch 5, bei dem als Phosphonat 1-Hydroxyethan-(1,1-diphosphonsäure), Amino-tris(methylenphosphonsäure), Diethylentriaminpenta(methylenphosphonsäure), Ethylendiamin-tetra(methylenphosphonsäure), Phosphonobutan-tricarbonsäure, 2-Phosphonobutan-1,2,4-tricarbonsäure und/oder 3-Carboxy-3-phosphonoadipinsäure zugegeben wird.

9. Verfahren nach Anspruch 5, bei dem nach der Zugabe des Korrosionsinhibitors und Mischung der wässrigen Lösung eine Filtration von nichtgelösten Bestandteilen der Mischung durchgeführt wird.

## Claims

1. Liquid deicing composition consisting of an aqueous solution having a pH of 7.0 to 9.0 containing at least the components
a) 30.0% to 40.0% by weight of at least one chloride of one or more of the elements Be, Mg, Ca, Ba or Ra and/or compounds comprising chlorides of these elements, and
b) 0.5% to 2.0% by weight of at least one phosphonate as a corrosion inhibitor.

2. Liquid deicing composition according to Claim 1 in which the aqueous solution contains 32.0% to 36.0% by weight of the component a) and 1.0% to 1.5% by weight of the component b).

3. Liquid deicing composition according to Claim 1 in which the component a) is magnesium chloride and/or calcium chloride.

4. Liquid deicing composition according to Claim 1 in which 1-hydroxyethane-(1,1-diphosphonic acid), aminotris(methylenephosphonic acid), diethylenetriaminepenta(methylenephosphonic acid), ethylenediaminetetra(methylenephosphonic acid), phosphonobutanetricarboxylic acid, 2-phosphonobutane-1,2,4-tricarboxylic acid and/or 3-carboxy-3-phosphonoadipic acid are present as the phosphonate.

5. Process for producing a liquid deicing composition in which a) at least 30.0% to 40.0% by weight of at least one chloride of one or more of the elements Be, Mg, Ca, Ba or Ra and/or compounds comprising chlorides of these elements is added to water, then the aqueous solution is mixed, then b) 0.5% to 2.0% by weight of at least one phosphonate is added to the aqueous solution as a corrosion inhibitor, wherein after the addition of the component a) and/or after addition of the component b) a cooling of the aqueous solution is realized by means of an air cooling apparatus and/or water cooling apparatus and finally the aqueous solution may be mixed again and subjected to further processing.

6. Process according to Claim 5 in which 32.0% to 36.0% by weight of a chloride of one or more of the elements Be, Mg, Ca, Ba or Ra or compounds comprising chlorides of these elements is added to water and 1.0% to 1.5% by weight of at least one phosphonate is added to the aqueous solution as the corrosion inhibitor.

7. Process according to Claim 5 in which magnesium chloride and/or calcium chloride are/is added as the chloride of the alkaline earth metals.

8. Process according to Claim 5 in which 1-hydroxyethane-(1,1-diphosphonic acid), aminotris(methylenephosphonic acid), diethylenetriaminepenta(methylenephosphonic acid), ethylenediaminetetra(methylenephosphonic acid), phosphonobutanetricarboxylic acid, 2-phosphonobutane-1,2,4-tricarboxylic acid and/or 3-carboxy-3-phosphonoadipic acid are added as the phosphonate.

9. Process according to Claim 5 in which after the addition of the corrosion inhibitor and mixing of the aqueous solution a filtration of undissolved constituents of the mixture is performed.

## Revendications

1. Agent de dégivrage liquide constitué par une solution aqueuse, qui présente un pH de 7,0 à 9,0, contenant au moins les composants suivants :
a) 30,0 à 40,0 % en poids d'au moins un chlorure d'un ou de plusieurs des éléments Be, Mg, Ca, Ba ou Ra et/ou de composés avec des chlorures de ces éléments, et
b) 0,5 à 2,0 % en poids d'au moins un phosphonate en tant qu'inhibiteur de corrosion.

2. Agent de dégivrage liquide selon la revendication 1, dans lequel la solution aqueuse contient 32,0 à 36,0 % en poids du composant a) et 1,0 à 1,5 % en poids du composant b).

3. Agent de dégivrage liquide selon la revendication 1, dans lequel le composant a) est le chlorure de magnésium et/ou le chlorure de calcium.

4. Agent de dégivrage liquide selon la revendication 1, dans lequel de l'acide 1-hydroxyéthane-(1,1-diphosphonique), de l'acide amino-tris(méthylène-phosphonique), de l'acide diéthylène-triamine-penta(méthylène-phosphonique), de l'acide éthylène-diamine-tétra(méthylène-phosphonique), de l'acide phosphonobutane-tricarboxylique, de l'acide 2-phosphonobutane-1,2,4-tricarboxylique et/ou de l'acide 3-carboxy-3-phosphonoadipique sont présents en tant que phosphonate.

5. Procédé de fabrication d'un agent de dégivrage liquide, selon lequel a) au moins 30,0 à 40,0 % en poids d'au moins un chlorure d'un ou de plusieurs des éléments Be, Mg, Ca, Ba ou Ra et/ou de composés avec des chlorures de ces éléments est ajouté à de l'eau, puis la solution aqueuse est mélangée, puis b) 0,5 à 2,0 % en poids d'au moins un phosphonate en tant qu'inhibiteur de corrosion est ajouté à la solution aqueuse, un refroidissement de la solution aqueuse par un dispositif de refroidissement à air et/ou un dispositif de refroidissement à eau étant réalisé après l'ajout du composant a) et/ou après l'ajout du composant b), et la solution aqueuse est enfin encore mélangée et peut être transformée.

6. Procédé selon la revendication 5, selon lequel 32,0 à 36,0 % en poids d'un chlorure d'un ou de plusieurs des éléments Be, Mg, Ca, Ba ou Ra et/ou de composés avec des chlorures de ces éléments est ajouté à de l'eau et 1,0 à 1,5 % en poids d'au moins un phosphonate en tant qu'inhibiteur de corrosion est ajouté à la solution aqueuse.

7. Procédé selon la revendication 5, selon lequel du chlorure de magnésium et/ou du chlorure de calcium sont ajoutés en tant que chlorure de métaux alcalino-terreux.

8. Procédé selon la revendication 5, selon lequel de l'acide 1-hydroxyéthane-(1,1-diphosphonique), de l'acide amino-tris(méthylène-phosphonique), de l'acide diéthylène-triamine-penta(méthylène-phosphonique), de l'acide éthylène-diamine-tétra(méthylène-phosphonique), de l'acide phosphonobutane-tricarboxylique, de l'acide 2-phosphonobutane-1,2,4-tricarboxylique et/ou de l'acide 3-carboxy-3-phosphonoadipique sont ajoutés en tant que phosphonate.

9. Procédé selon la revendication 5, selon lequel une filtration de constituants non dissous du mélange est réalisée après l'ajout de l'inhibiteur de corrosion et le mélange de la solution aqueuse.
